# NOUVEAU FASCICULE DE BREVET EUROPEEN

(11) **EP 1 623 862 B2**
(45) Date de publication et mention de la décision concernant l'opposition: **11.07.2012**
(45) Mention de la délivrance du brevet: 02.07.2008
(21) Numéro de dépôt: 05107172.8
(22) Date de dépôt: 03.08.2005
(51) Int. Cl.: B60J 1/20

(54) **Store à compensation de jeu pour véhicule automobile et véhicule automobile correspondant.**
Rollo mit Spielausgleich für ein Fahrzeug und korrespondierendes Fahrzeug.
Roller blind with clearance compensation for a motor vehicle and corresponding motor vehicle.

(30) Priorité: 04.08.2004 FR 0408643
(43) Date de publication de la demande: 08.02.2006
(73) Titulaire: Advanced Comfort Systems France SAS - ACS France, 79300 Bressuire (FR)
(72) Inventeur: Fourel, Pascal, 35400, Saint Malo (FR)
(74) Mandataire: Bioret, Ludovic

(56) Documents cités:
- EP-A- 0 404 662
- EP-A- 0 671 539
- EP-A- 0 834 414
- EP-A- 1 153 777
- EP-A1- 0 087 555
- EP-A1- 1 211 110
- DE-A1- 3 941 877
- DE-A1- 10 158 875
- DE-A1- 10 240 582
- DE-C2- 3 427 899
- US-A- 5 024 479

## Description

### 1. Domaine de l'invention

Le domaine de l'invention est celui des stores, notamment pour véhicule automobile (tels que les voitures, les véhicules utilitaires, les camions, les autobus, etc.). Plus précisément, l'invention concerne le montage des stores à enrouleur, en présence de jeux éventuels et en tenant compte des tolérances sur le positionnement des éléments de fixation prévus sur le véhicule.

### 2. Art antérieur

On prévoit souvent des stores, dans les véhicules automobiles, notamment pour les vitres latérales ou de custode. Le tube enrouleur du store doit être fixé, par l'intermédiaire d'un boîtier ou directement par ses paliers, à la structure du véhicule, voir par exemple EP-A-0671539.

De tels stores ont également été développés plus récemment pour occulter des pavillons vitrés. Plus généralement, des stores à enrouleur peuvent être mis en oeuvre en regard de toute surface vitrée, ainsi que pour dissimuler un espace, par exemple sous la forme d'un cache-bagage.

Une difficulté est que les véhicules automobiles ont des tolérances relativement importantes (classiquement de quelques millimètres).

Un inconvénient de ces tolérances importantes est qu'elles peuvent rendre difficile le maintien correct de la toile en position déployée. La toile est souvent mal tendue (un côté étant plus long que l'autre) et/ou mal centrée. Cela pose des problèmes, notamment au niveau esthétique.

En effet, ces jeux peuvent générer localement un manque de tension de la toile ou un décalage de la barre de tirage d'une position prévue, ce qui peut faire apparaître des ondulations non régulières sur sa surface dégradant l'esthétique du véhicule lorsque le store est déployé.

Par ailleurs, un manque de tension peut introduire des problèmes mécaniques et des bruits, par exemple de claquements. Le mouvement de la toile peut également perturber le conducteur.

D'une façon générale, il n'est pas acceptable, dans un véhicule actuel, que la toile d'un store ne soit pas bien tendue.

### 3. Objectifs de l'invention

L'invention a donc notamment pour objectif de pallier ces inconvénients de l'art antérieur.

Plus précisément, un objectif de l'invention est de fournir une technique qui permette de garantir une tension suffisante de la toile d'occultation d'un store même en présence de jeux, que ce soit sur la position du tube enrouleur ou sur les moyens d'accrochage de la barre de tirage.

Un autre objectif de l'invention est de fournir une telle technique qui permette, dans certains modes de réalisation, de garantir un centrage efficace de la toile d'un tel store.

Un autre objectif de l'invention est de fournir une telle technique qui permette de s'affranchir simplement et efficacement des inconvénients liés aux défauts de tension de la toile et/ou à un décalage de la barre de tirage d'une position prédéterminée.

L'invention a encore pour objectif de fournir une telle technique qui permette de supprimer les mauvais fonctionnements et les bruits de claquement dus à un manque de tension de la toile d'un store d'un véhicule lorsqu'il se déplace.

Encore un autre objectif de l'invention est de fournir une telle technique qui soit simple à mettre en oeuvre et à faible coût. Notamment, un objectif de l'invention est de permettre un montage simple et efficace même en présence d'un store aux dimensions importantes, et en présence des tolérances classiques dans le domaine automobile.

### 4. Caractéristiques essentielles de l'invention

Ces objectifs, ainsi que d'autres qui apparaîtront par la suite, sont atteints à l'aide d'un store pour véhicule automobile, comprenant les caractéristiques de la revendication 1.

Ainsi, les moyens de compensation d'un jeu dû aux tolérances sur les dimensions du store permettent, en tendant les bords latéraux de la toile, de s'affranchir notamment des mauvais fonctionnements du store et des bruits de claquement qui peuvent apparaître lorsque le véhicule se déplace.

Par ailleurs, ces moyens de compensation permettent de garantir un centrage efficace de la toile du store ainsi que de la barre de tirage.

Selon une caractéristique avantageuse de l'invention, les moyens élastiques tendent à éloigner l'extrémité correspondante de la barre de tirage d'un tube d'enroulement de la toile d'occultation.

Préférentiellement, les moyens de compensation comprennent une lame souple formant ressort.

Avantageusement, les moyens élastiques sont en matière plastique.

Selon un mode de réalisation préférentiel, la lame souple comprend une première extrémité de fixation, s'étendant sensiblement horizontalement et solidarisée à une partie inférieure du logement correspondant, et une seconde extrémité recourbée, définissant un bossage destiné à coopérer avec une extrémité de la barre de tirage.

Préférentiellement, au moins un desdits logements comprend des moyens de centrage de la barre de tirage, selon l'axe défini par la barre de tirage.

Selon une caractéristique avantageuse, chacun des logements est conçu de façon que l'extrémité correspondante de la barre de tirage peut pénétrer sur une profondeur variable.

Selon un mode de mise en oeuvre préférentiel de l'invention, au moins une des extrémités de la barre de tirage présente un plan incliné, définissant une portion de queue d'aronde.

Préférentiellement, les deux logements comprennent des moyens de compensation et/ou des moyens de centrage symétriques.

L'invention concerne également un véhicule automobile comprenant au moins un store tel que décrit précédemment.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre schématiquement un store à enrouleur en position déployée, mettant en oeuvre un mode de réalisation préférentiel de la technique de l'invention ;
- la figure 2 présente un mode de réalisation préférentiel ne correspondant pas à l'invention, des premiers moyens de compensation à base d'éléments de rappel dans le store de la figure 1 ;
- la figure 3 décrit un mode de réalisation selon lequel, conformément à l'invention, l'extrémité présente un plan incliné.

### 6. Description d'un mode de réalisation de l'invention

Le principe général de l'invention repose sur la mise en oeuvre, dans des logements, ou godets, de réception de la barre de tirage d'un store à enrouleur, de moyens de compensation tels que des lames ressort, afin de compenser les éventuels jeux présents, préférentiellement dans les deux directions du plan de la toile du store, et donc de tendre cette toile lorsqu'elle est en position déployée.

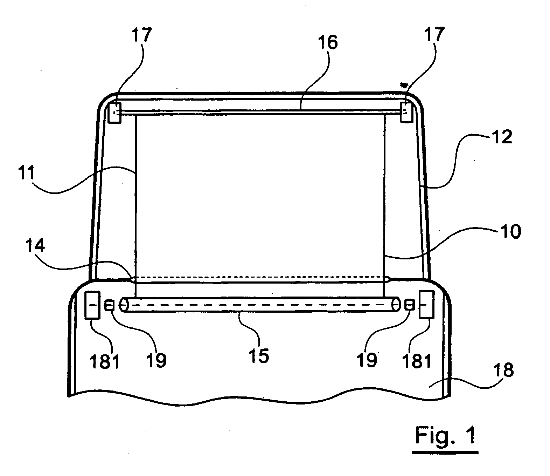

On présente, en figure 1, un exemple de store à enrouleur pour occulter une vitre d'un véhicule automobile 18 selon un mode de réalisation préférentiel de l'invention.

On se place dans le cas de la vitre latérale. Cependant, le store selon l'invention peut être mis en oeuvre pour occulter tout type de surface au moins partiellement transparente (par exemple en verre, en plexiglas, ...), par exemple une vitre arrière ou un pavillon de tout type de véhicule.

Le store 10 comprend une toile d'occultation 11, formant écran, en position déployée, devant une baie vitrée 12 du véhicule automobile. La toile 11 est susceptible d'être déroulée ou enroulée au travers d'une fente 14 ménagée dans l'habillage du véhicule.

Une des extrémités de la toile 11 est montée sur un tube enrouleur 15, mobile en rotation (d'autres modes de repliement du store sont bien souvent envisageables). L'autre extrémité de la toile est munie d'une barre de tirage 16, laquelle est prévue pour être solidarisée en ses extrémités dans des éléments d'accrochage, ou logements, 17 solidaires du véhicule. Lors du passage de la position déployée à la position repliée, la toile 11 est enroulée autour du tube enrouleur 15.

Le tube enrouleur 15 est maintenu en ses deux extrémités au moyen de deux paliers 19. Des éléments de fixation 181, solidaires du véhicule 18 permettent de fixer les paliers 19 au véhicule 18.

Lors du montage du store 10 et des éléments d'accrochage 17 de la barre de tirage dans le véhicule 18, les tolérances dans le domaine automobile peuvent introduire des jeux à la fois dans l'écartement entre les éléments d'accrochage 17 et/ou les éléments de fixation 181.

Ces jeux peuvent générer un manque de tension de la toile 11 d'un côté ou d'un autre et/ou un décalage de la barre de tirage 16 par rapport à une position centrée prédéterminée.

La présente invention propose des moyens de compensation de ces jeux, ces moyens permettant notamment de retendre la toile 11.

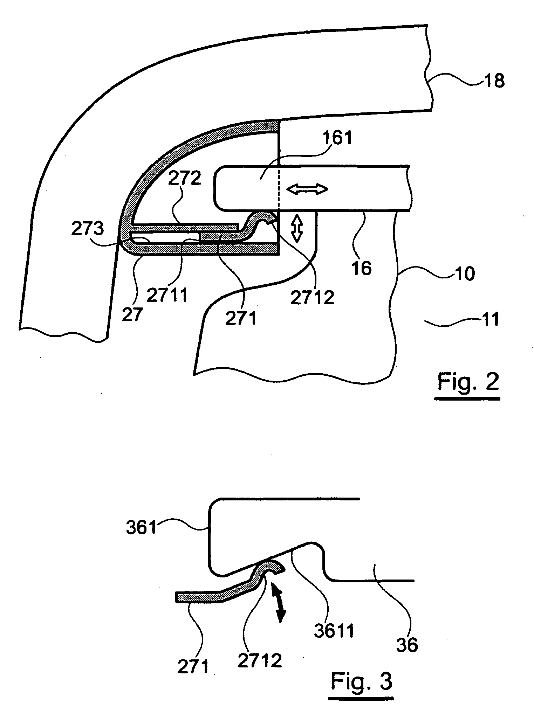

La figure 2 présente un mode de réalisation ne correspondant pas à l'invention des moyens de compensation d'un jeu dans l'écartement entre une des extrémités de la barre de tirage 16 et le tube enrouleur 15 à base d'éléments de rappel. On appelle ce jeu, jeu longitudinal.

Par souci de simplicité, on ne représente, sur cette figure 2, qu'une première partie (partie gauche) du store 10 et un premier élément d'accrochage 17 d'une première extrémité (extrémité gauche) de la barre de tirage 16. Préférentiellement, la seconde partie (droite) du store 10 ainsi que le second élément d'accrochage 17 de la seconde extrémité (droite) de la barre de tirage 16 sont sensiblement symétriques aux premières (gauches).

Selon un mode de mise en oeuvre préférentiel, les éléments d'accrochage 17 de la figure 1 sont des godets 27 sur la figure 2 (seul le premier godet est représenté).

Le godet 27 comprend une lame ressort 271 dont une première partie, ou extrémité, 2711 est maintenue, dans le godet 27, entre une plaque inférieure 273 et une plaque intermédiaire 272 de ce godet 27, par pincement. D'autres moyens de solidarisation (collage, soudage, rivetage...) sont bien sûr envisageables.

La lame 271 est recourbée en une seconde partie 2712 afin de former une zone élastique (ou zone de rappel). Ainsi, lorsque la toile 11 est en position déployée, la première extrémité 161 de la barre de tirage 16 est posée sur la seconde partie 2712 de la lame 271. Cette dernière exerce une force de rappel sur la première extrémité 161 de la barre de tirage qui tend à l'éloigner du tube enrouleur 15. Cette force de rappel permet de tendre le premier côté (gauche) de la toile 11 dans sa direction d'extension.

Une force de rappel symétrique est également exercée sur la seconde extrémité (non représentée) de la barre de tirage, ce qui permet de tendre la toile 11, dans son ensemble, dans sa direction d'extension (ou direction longitudinale). Ainsi, même si les deux godets 17 ne se trouvent pas exactement à la même distance du tube enrouleur 15, les lames ressort 271 rattrapent, ou compensent, le décalage (au moins dans une certaine mesure, par exemple sur 2 à 5 mm) et assurent en conséquence que la toile 11 soit bien tendue.

La figure 3 présente un mode de réalisation selon l'invention des moyens de centrage, ou de compensation, d'un décalage de la position de la barre de tirage d'une position centrée, dans le cadre du store 10 de la figure 2.

Selon un mode de mise en oeuvre avantageux de l'invention, les lames ressort sont identiques à celles décrites en relation avec la figure 2, et la barre de tirage 16 est remplacée par une barre de tirage 36 modifiée, permettant de compenser un jeu, dit jeu de traverse.

Par souci de simplicité, et de même que pour la figure 2, on ne représente, sur cette figure 3, que la première partie (partie gauche) du store 10 et le premier godet 27.

La partie inférieure d'une première extrémité 361 de la barre de tirage 36 est modifiée de façon à présenter un plan incliné 3611, formant portion de guidage, et donc de centrage, de la partie 2712 de la lame ressort. Ainsi, l'extrémité 361 de la barre de tirage 36 peut coulisser le long de cette partie 2712 de la lame 271, guidée par la pente 3611.

Le plan incliné, qui définit une portion de queue d'aronde s'étend par exemple sur 1 à 3 cm, et présente une pente de 3 à 10 mm.

Ainsi, la seconde partie 2712 de la lame 271 forme moyen de rappel et exerce une force de rappel tendant à rapprocher la première extrémité 361 du godet 27.

Une force de rappel symétrique est également exercée, dans une direction opposée, sur la seconde extrémité (non représentée) de la barre de tirage 36, ce qui permet de centrer la barre de tirage 36 et ainsi compenser un éventuel décalage de la barre de tirage 36 d'une position centrée.

Bien entendu, l'invention n'est pas limitée aux exemples de réalisation mentionnés ci-dessus.

En particulier, l'Homme du Métier pourra apporter toute variante dans les éléments d'accrochage.

L'invention s'applique également à un store dont les moyens de compensation ne sont situés que dans un seul des godets. L'invention s'applique bien sûr également à un store dont les premiers et/ou les seconds moyens de compensations ne sont pas symétriques dans les deux godets.

## Revendications

1. Store pour véhicule automobile (18), comprenant une toile d'occultation (11) solidarisée par une de ses extrémités à une barre de tirage (16, 36), et des moyens de maintien de ladite barre de tirage (16, 36) dans une position de déploiement de ladite toile (11),
lesdits moyens de maintien comprenant deux logements d'accrochage (27) solidaires de la structure dudit véhicule, destinés à recevoir respectivement chacune des deux extrémités (161) de ladite barre de tirage (16, 36),
**caractérisé en ce qu'**au moins un desdits logements (27) comprend des moyens de compensation élastiques (271) pouvant compenser:
- un jeu éventuel selon l'axe de déploiement de ladite toile d'occultation (11), de façon que les deux bords latéraux de ladite toile soient tendus, et
- un jeu éventuel de traverse, selon l'axe défini par ladite barre de tirage, lesdits moyens de compensation formant moyens de centrage de ladite barre de tirage (16), en guidant au moins une desdites extrémités de la barre de tirage (361) présentant un plan incliné (3611), pouvant coulisser le long desdits moyens de compensation.

2. Store pour véhicule automobile selon la revendication 1, **caractérisé en ce que** lesdits moyens de compensation élastiques (271) tendent à éloigner l'extrémité correspondante de ladite barre de tirage d'un tube d'enroulement de ladite toile d'occupation (11).

3. Store pour véhicule automobile selon l'une quelconque des revendications 1 et 2, **caractérisé en ce que** lesdits moyens de compensation comprennent une lame souple (271) formant ressort.

4. Store pour véhicule automobile selon l'une quelconque des revendications 1 à 3, **caractérisé en ce que** lesdits moyens de compensation élastiques sont en matière plastique.

5. Store pour véhicule automobile selon l'une quelconque des revendications 3 et 4, **caractérisé en ce que** ladite lame souple (271) comprend une première extrémité (2711) de fixation, s'étendant sensiblement horizontalement et solidarisée à une partie inférieure du logement correspondant, et une seconde extrémité recourbée (2712), définissant un bossage destiné à coopérer avec une extrémité (161) de ladite barre de tirage.

6. Store pour véhicule automobile selon l'une des revendications 1 à 5, **caractérisé en ce que** chacun desdits logements (27) est conçu de façon que l'extrémité correspondante de ladite barre de tirage (16) peut pénétrer sur une profondeur variable.

7. Store pour véhicule automobile selon l'une quelconque des revendications 1 à 6, **caractérisé en ce que** les deux logements (27) comprennent des moyens de compensation et/ou des moyens de centrage symétriques.

8. Véhicule automobile **caractérisé en ce qu'**il comprend au moins un store selon l'une quelconque des revendications 1 à 7.

## Claims

1. Roller blind for a motor vehicle (18), comprising a blackout sheet (11) integrated by one of its ends with a draw bar (16, 36) and means for maintaining said draw bar (16, 36) in a position of deployment of said sheet (11),
said maintenance means comprising two catches (27) integrated with the structure of said vehicle, intended to respectively receive each of the two ends (161) of said draw bar (16, 36),
**characterised in that** at least one of said catches (27) comprises resilient means (271) for compensating:
- any clearance along the axis of deployment of said blackout sheet (11), so that the two lateral edges of said sheet are tightened and
- any transverse clearance along the axis defined by said draw bar, said compensation means forming means for centring said draw bar (16), by guiding at least one of said ends of the draw bar (361) having an inclined plane (3611), able to slide along said compensating means.

2. Roller blind for a motor vehicle according to Claim 1, **characterized in that** said resilient compensation means (271) tend to move the corresponding end of said draw bar away from a tube for rolling up said blackout sheet (11).

3. Roller blind for a motor vehicle according to either of Claims 1 and 2, **characterized in that** said compensation means comprise a flexible leaf (271) forming a spring.

4. Roller blind for a motor vehicle according to any one of Claims 1 to 3, **characterized in that** said resilient compensation means are made of plastic.

5. Roller blind for a motor vehicle according to either of Claims 3 and 4, **characterized in that** said leaf spring (271) comprises a first fixing end (2711) extending substantially horizontally and integrated with a lower part of the corresponding catch and a second curved end (2712), defining a lug intended to cooperate with an end (161) of said draw bar.

6. Roller blind for a motor vehicle according to one of Claims 1 to 5, **characterized in that** each of said catches (27) is designed so that the corresponding end of said draw bar (16) can penetrate to a variable depth.

7. Roller blind for a motor vehicle according to any one of Claims 1 to 6, **characterized in that** the two catches (27) comprise compensation means and/or symmetrical centring means.

8. Motor vehicle **characterized in that** it comprises at least one roller blind according to any one of Claims 1 to 7.

## Patentansprüche

1. Rollvorhang für Automobilfahrzeug (18), ein Verdunkelungsgewebe (11) umfassend, das durch eines seiner Enden fest mit einer Zugstange (16, 36) und Mitteln zum Halten der Zugstange in einer Ausspannposition des Gewebes verbunden ist,
wobei die Haltemittel zwei Rastgehäuse (27) umfassen, die fest mit der Struktur des Fahrzeugs verbunden sind und jeweils zwei der Enden (161) der Zugstange (16) aufnehmen sollen,
**dadurch gekennzeichnet, dass** mindestens eines der Gehäuse (27) Mittel zum elastischen Ausgleichen (271) aufweist, die in der Lage sind auszugleichen:
- ein eventuelles Spiel in der Ausspannachse des Verdunkelungsgewebes (11) derart, dass die zwei Seitenränder des Gewebes gespannt sind,
- ein eventuelles Querspiel entlang der durch die Zugstange definierten Achse, wobei die Ausgleichmittel Zentriermittel der Zugstange (16) bilden, indem sie mindestens eines der Enden der Zugstange (361) führen, welches eine geneigte Ebene (3611) aufweist, die entlang der Ausgleichmittel gleiten kann.

2. Rollvorhang für Automobilfahrzeug nach Anspruch 1, **dadurch gekennzeichnet, dass** die elastischen Mittel (271) dazu neigen, das entsprechende Ende der Zugstange eines Aufwickelrohrs des Verdunkelungsgewebes (11) fernzuhalten.

3. Rollvorhang für Automobilfahrzeug nach einem der Ansprüche 1 und 2, **dadurch gekennzeichnet, dass** die Mittel zum Ausgleichen ein nachgiebiges Blatt (271) umfassen, das als Feder ausgebildet ist.

4. Rollvorhang für Automobilfahrzeug nach einem der Ansprüche 1 bis 3, **dadurch gekennzeichnet, dass** die elastischen Mittel aus Kunststoff sind.

5. Rollvorhang für Automobilfahrzeug nach einem der Ansprüche 3 und 4, **dadurch gekennzeichnet, dass** das nachgiebige Blatt (271) ein erstes Ende (2711) zur Befestigung umfasst, das sich im Wesentlichen horizontal erstreckt und mit einem unteren Abschnitt des entsprechenden Gehäuses fest verbunden ist und ein zweites gebogenes Ende (2712), das einen Buckel definiert, der mit einem ersten Ende (161) der Zugstange zusammenwirken soll.

6. Rollvorhang für Automobilfahrzeug nach einem der Ansprüche 1 bis 5, **dadurch gekennzeichnet, dass** jedes der Gehäuse (27) derart gestaltet ist, dass das entsprechende Ende der Zugstange (16) über eine variable Tiefe eindringen kann.

7. Rollvorhang für Automobilfahrzeug nach einem der Ansprüche 1 bis 6, **dadurch gekennzeichnet, dass** die zwei Gehäuse (27) Ausgleichmittel und/oder symmetrische Zentriermittel umfassen.

8. Automobilfahrzeug, **dadurch gekennzeichnet, dass** es mindestens einen Rollvorhang gemäß einem der Ansprüche 1 bis 7 umfasst.
